# EUROPEAN PATENT APPLICATION

(11) **EP 4 815 400 A1**
(43) Date of publication of application: **30.09.2026**
(21) Application number: 24893081.0
(22) Date of filing: 14.10.2024
(51) Int. Cl.: H04L 47/83

(54) **CONTENT DELIVERY NETWORK BANDWIDTH CONTROL METHOD, APPARATUS AND DEVICE, AND STORAGE MEDIUM**

(30) Priority: 24.11.2023 CN 202311591238
(71) Applicant: Shenzhen TCL New Technology Co., Ltd, Shenzhen, Guangdong 518052 (CN)
(72) Inventor: YE, Hanhua, Shenzhen, Guangdong 518052 (CN)
(74) Representative: Murgitroyd & Company
(86) International application number: PCT/CN2024/124792
(87) International publication number: WO 2025/107922

(57) **Abstract**

The present application provides a content delivery network bandwidth control method, apparatus and device, and a readable storage medium. The content delivery network bandwidth control method of the present application comprises the following steps: on the basis of historical traffic data and current active data of a target upgrade platform, predicting traffic growth trend data of the target upgrade platform within a target prediction time period; calculating a predicted distribution bandwidth of the target upgrade platform on the basis of the traffic growth trend data and peak traffic data, and determining a target control strategy for the target upgrade platform on the basis of the predicted distribution bandwidth and a preset bandwidth control threshold, the target control strategy comprising any one of a rate limiting control strategy and a passthrough control strategy; and performing bandwidth control on the current distribution bandwidth of the target upgrade platform on the basis of a rate limiting percentage corresponding to the target control strategy. The present application can reduce the distribution bandwidth of an application upgrade management platform, thereby reducing the traffic cost of the application upgrade management platform.

## Description

This application claims priority to Chinese Patent Applications No. 202311591238.1, filed on November 24, 2023 and entitled "CONTENT DELIVERY NETWORK BANDWIDTH CONTROL METHOD, APPARATUS AND DEVICE, AND STORAGE MEDIUM". The entire disclosures of the above application are incorporated herein by reference.

### TECHNICAL FIELD

The present application relates to the field of computer technologies, and in particular, to a content delivery network bandwidth control method, apparatus, device, and storage medium.

### BACKGROUND TECHNOLOGY

At present, with the rapid development of Internet technologies, many enterprises use application upgrade management platforms to perform operations such as software version control management, software release, and software upgrade. The application upgrade management platform consists of an upgrade backend and an upgrade API (Application Programming Interface). Costs of the existing application upgrade management platform mainly comprise server costs, file storage costs, and CDN (Content Delivery Network) costs. Existing application upgrade management platforms exhibit relatively large fluctuations in daily task distribution trends, and network bandwidth fluctuates greatly within a statistical time period, thereby causing excessively high CDN costs and further resulting in excessively high costs of the entire upgrade platform.

### SUMMARY OF INVENTION

Embodiments of the present application provide a content delivery network bandwidth control method, apparatus, device, and storage medium, aiming to solve the problem in the related art that bandwidth fluctuations during upgrade task distribution by an application upgrade management platform result in relatively high costs of the upgrade platform.

In one aspect, embodiments of the present application provide a content delivery network bandwidth control method, wherein the content delivery network bandwidth control method comprises the following steps:
Predicting, based on historical traffic data and current active data of a target upgrade platform, traffic growth trend data of the target upgrade platform within a target prediction time period.

Calculating a predicted distribution bandwidth of the target upgrade platform according to the traffic growth trend data and peak traffic data.

Determining a target control strategy of the target upgrade platform according to the predicted distribution bandwidth and a preset bandwidth control threshold, wherein the target control strategy comprises any one of a rate limiting control strategy and a passthrough control strategy.

Performing bandwidth control on a current distribution bandwidth of the target upgrade platform according to a rate limiting percentage corresponding to the target control strategy.

In one possible implementation of the present application, the determining the target control strategy of the target upgrade platform according to the predicted distribution bandwidth and the preset bandwidth control threshold comprises:
Acquiring a bandwidth control threshold corresponding to the target upgrade platform.

Setting a preset passthrough control strategy as the target control strategy of the target upgrade platform if the predicted distribution bandwidth is less than the bandwidth control threshold.

Setting a preset rate limiting control strategy as the target control strategy of the target upgrade platform if the predicted distribution bandwidth is greater than or equal to the bandwidth control threshold.

In one possible implementation of the present application, the performing bandwidth control on the current distribution bandwidth of the target upgrade platform according to the rate limiting percentage corresponding to the target control strategy comprises:
Acquiring, in response to an upgrade request associated with the target upgrade platform, a device identifier carried in the upgrade request.

Acquiring the rate limiting percentage of the target control strategy and a rate limiting attribute corresponding to the rate limiting percentage, wherein the rate limiting attribute comprises a minimum limiting parameter and a maximum limiting parameter.

Determining a rate-limited upgrade request of the target upgrade platform according to a rate limiting verification parameter in the device identifier, the minimum limiting parameter, and the maximum limiting parameter, and performing bandwidth control on the current distribution bandwidth of the target upgrade platform based on the rate-limited upgrade request.

In one possible implementation of the present application, the determining the rate-limited upgrade request of the target upgrade platform according to the rate limiting verification parameter in the device identifier, the minimum limiting parameter, and the maximum limiting parameter, and performing bandwidth control on the current distribution bandwidth of the target upgrade platform based on the rate-limited upgrade request comprises:
Setting the upgrade request corresponding to the device identifier as the rate-limited upgrade request if the rate limiting verification parameter in the device identifier is less than the minimum limiting parameter, or the rate limiting verification parameter is greater than a preset rate limiting coefficient and less than the maximum limiting parameter.

Performing rate limiting control on the rate-limited upgrade request according to the rate limiting control strategy, so as to reduce the current distribution bandwidth of the target upgrade platform.

In one possible implementation of the present application, the performing bandwidth control on the current distribution bandwidth of the target upgrade platform according to the rate limiting percentage corresponding to the target control strategy comprises:
Calculating, if the target control strategy is a rate limiting control strategy, the rate limiting percentage of the target control strategy according to a bandwidth limiting threshold in the target control strategy and a predicted peak bandwidth in the predicted distribution bandwidth.

Acquiring a rate limiting coefficient of the target control strategy, and generating a rate limiting attribute of the target control strategy according to the rate limiting coefficient and the rate limiting percentage.

Filtering, according to the rate limiting attribute of the target control strategy, rate-limited upgrade requests of the target upgrade platform, so as to reduce the current distribution bandwidth of the target upgrade platform.

In one possible implementation of the present application, the generating the rate limiting attribute of the target control strategy according to the rate limiting coefficient and the rate limiting percentage comprises:
Calculating a maximum limiting parameter of the target control strategy according to the rate limiting coefficient and the rate limiting percentage.

Setting a preset limiting parameter as a minimum limiting parameter of the target control strategy if the maximum limiting parameter is less than a preset rate limiting threshold.

Setting a difference between the maximum limiting parameter and the preset rate limiting threshold as the minimum limiting parameter of the target control strategy if the maximum limiting parameter is greater than the preset rate limiting threshold.

Setting the maximum limiting parameter and the minimum limiting parameter as the rate limiting attribute of the target control strategy.

In one possible implementation of the present application, the predicting, based on the historical traffic data and the current active data of the target upgrade platform, the traffic growth trend data of the target upgrade platform within the target prediction time period comprises:
Capturing, according to a preset acquisition strategy, the historical traffic data of the target upgrade platform and the current active data of the target upgrade platform.

Inputting the historical traffic data and the current active data into a preset traffic prediction model to perform traffic prediction, so as to obtain the traffic growth trend data of the target upgrade platform within the target prediction time period.

In another aspect, the present application provides a content delivery network bandwidth control apparatus, wherein the content delivery network bandwidth control apparatus comprises:
A data prediction module configured to predict, based on historical traffic data and current active data of a target upgrade platform, traffic growth trend data of the target upgrade platform within a target prediction time period.

A strategy selection module configured to calculate a predicted distribution bandwidth of the target upgrade platform according to the traffic growth trend data and peak traffic data, and determine a target control strategy of the target upgrade platform according to the predicted distribution bandwidth and a preset bandwidth control threshold, wherein the target control strategy comprises any one of a rate limiting control strategy and a passthrough control strategy.

A bandwidth control module configured to perform bandwidth control on a current distribution bandwidth of the target upgrade platform according to a rate limiting percentage corresponding to the target control strategy.

In another aspect, the present application further provides a content delivery network bandwidth control device, wherein the content delivery network bandwidth control device comprises:
One or more processors.

### A memory.

One or more applications, wherein the one or more applications are stored in the memory and configured to be executed by the one or more processors to implement the steps of the content delivery network bandwidth control method.

In another aspect, the present application further provides a computer-readable storage medium, wherein a computer program is stored thereon, and the computer program is loaded by a processor to execute the steps of the content delivery network bandwidth control method.

In the present application, by predicting, based on historical traffic data and current active data of a target upgrade platform, traffic growth trend data of the target upgrade platform within a target prediction time period; calculating a predicted distribution bandwidth of the target upgrade platform according to the traffic growth trend data and peak traffic data; determining a target control strategy of the target upgrade platform according to the predicted distribution bandwidth and a preset bandwidth control threshold, wherein the target control strategy comprises any one of a rate limiting control strategy and a passthrough control strategy; and performing bandwidth control on a current distribution bandwidth of the target upgrade platform according to a rate limiting percentage corresponding to the target control strategy, traffic data of an application upgrade management platform can be predicted, and a corresponding traffic control strategy can be set according to the traffic data, thereby performing rate limiting control on upgrade requests, reducing the distribution bandwidth of the application upgrade management platform, and further reducing traffic cost of the application upgrade management platform.

### BRIEF DESCRIPTION OF THE DRAWINGS

In order to more clearly illustrate the technical solutions in the embodiments of the present application, the drawings required for describing the embodiments will be briefly introduced below. It is apparent that the drawings described below are merely some embodiments of the present application, and for those skilled in the art, other drawings can also be obtained based on these drawings without creative effort.
FIG. 1 is a schematic diagram of a scenario of a content delivery network bandwidth control method according to an embodiment of the present application.
FIG. 2 is a schematic flowchart of an embodiment of the content delivery network bandwidth control method according to an embodiment of the present application.
FIG. 3 is a schematic flowchart of an embodiment of determining a rate limiting percentage and a rate limiting attribute of a target control strategy in the content delivery network bandwidth control method according to an embodiment of the present application.
FIG. 4 is a schematic flowchart of an embodiment of performing rate limiting control on upgrade requests of a target upgrade platform through a target control strategy in the content delivery network bandwidth control method according to an embodiment of the present application.
FIG. 5 is a schematic structural diagram of an embodiment of a content delivery network bandwidth control apparatus according to an embodiment of the present application.
FIG. 6 is a schematic structural diagram of an embodiment of a content delivery network bandwidth control device according to an embodiment of the present application.

### DETAILED DESCRIPTION OF THE PREFERRED EMBODIMENTS

The technical solutions in the embodiments of the present application will be clearly and completely described below with reference to the accompanying drawings in the embodiments of the present application. Apparently, the described embodiments are merely a part of the embodiments of the present application, rather than all of the embodiments. All other embodiments obtained by those skilled in the art based on the embodiments in the present application without creative efforts shall fall within the protection scope of the present application.

In the description of the present application, it should be understood that terms such as "center," "longitudinal," "transverse," "length," "width," "thickness," "upper," "lower," "front," "rear," "left," "right," "vertical," "horizontal," "top," "bottom," "inner," and "outer" indicate orientations or positional relationships based on the orientations or positional relationships shown in the accompanying drawings, and are merely used for convenience of describing the present application and simplifying the description, rather than indicating or implying that the referred apparatus or element must have a particular orientation, be constructed in a particular orientation, and operate in a particular orientation. Therefore, these terms should not be construed as limitations on the present application. In addition, the terms "first" and "second" are merely used for descriptive purposes and should not be construed as indicating or implying relative importance or implicitly indicating the number of the indicated technical features. Thus, features defined with "first" and "second" may explicitly or implicitly include one or more of the features. In the description of the present application, "a plurality of" means two or more, unless otherwise specifically defined.

In the present application, the word "exemplary" is used to mean "serving as an example, instance, or illustration." Any embodiment described herein as "exemplary" is not necessarily to be construed as preferred or advantageous over other embodiments. In order to enable any person skilled in the art to implement and use the present application, the following description is provided. In the following description, details are set forth for purposes of explanation. It should be understood that those of ordinary skill in the art may recognize that the present application may also be implemented without using these specific details. In other instances, well-known structures and processes are not described in detail so as to avoid unnecessary details from obscuring the description of the present application. Accordingly, the present application is not intended to be limited to the illustrated embodiments, but is to be accorded the widest scope consistent with the principles and features disclosed in the present application.

Based on this, the present application provides a content delivery network bandwidth control method, apparatus, device, and computer-readable storage medium, so as to solve the technical problem in the related art that costs are relatively high because traffic control cannot be performed when an application upgrade management platform distributes upgrade tasks.

The content delivery network bandwidth control method in the embodiments of the present application is applied to a content delivery network bandwidth control apparatus. The content delivery network bandwidth control apparatus is arranged in a content delivery network bandwidth control device. The content delivery network bandwidth control device is provided with one or more processors, a memory, and one or more applications, wherein the one or more applications are stored in the memory and configured to be executed by the one or more processors to implement the content delivery network bandwidth control method. The content delivery network bandwidth control device may be an intelligent terminal, such as a mobile phone, a tablet computer, a network device, or an intelligent computer. Optionally, the content delivery network bandwidth control device may further be a server, or a service cluster composed of multiple servers.

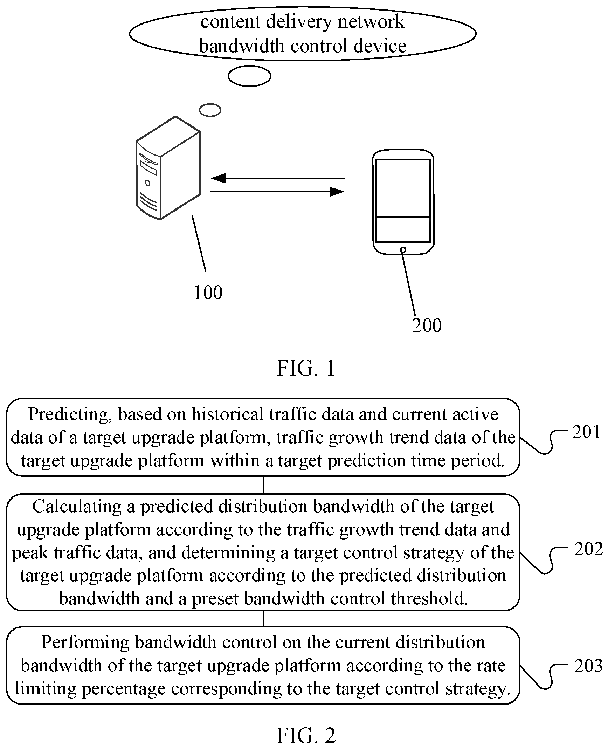

As shown in FIG. 1, FIG. 1 is a schematic diagram of a scenario of the content delivery network bandwidth control method according to an embodiment of the present application. The content delivery network bandwidth control scenario in the embodiment of the present application comprises a content delivery network bandwidth control device 100 (a content delivery network bandwidth control apparatus is integrated in the content delivery network bandwidth control device 100) and a target service terminal 200. A computer-readable storage medium corresponding to the content delivery network bandwidth control method is executed in the content delivery network bandwidth control device 100 to execute the steps of the content delivery network bandwidth control method. The target service terminal 200 is a service terminal that performs data interaction with the content delivery network bandwidth control device 100 and sends an upgrade request to the content delivery network bandwidth control device.

It can be understood that the content delivery network bandwidth control device in the scenario of the content delivery network bandwidth control method shown in FIG. 1, or the apparatus comprised in the content delivery network bandwidth control device, does not constitute a limitation on the embodiments of the present application. That is, the number of devices, device types, or the number and types of apparatuses comprised in each device included in the scenario of the content delivery network bandwidth control method do not affect the overall implementation of the technical solutions in the embodiments of the present application, and may all be regarded as equivalent substitutions or derivations of the technical solutions claimed in the embodiments of the present application.

In the embodiments of the present application, the content delivery network bandwidth control device 100 is mainly configured to: predict, based on historical traffic data and current active data of a target upgrade platform, traffic growth trend data of the target upgrade platform within a target prediction time period; calculate a predicted distribution bandwidth of the target upgrade platform according to the traffic growth trend data and peak traffic data; determine a target control strategy of the target upgrade platform according to the predicted distribution bandwidth and a preset bandwidth control threshold, wherein the target control strategy comprises any one of a rate limiting control strategy and a passthrough control strategy; and perform bandwidth control on a current distribution bandwidth of the target upgrade platform according to a rate limiting percentage corresponding to the target control strategy.

The content delivery network bandwidth control device 100 in the embodiments of the present application may be an independent content delivery network bandwidth control device, such as an intelligent terminal including a mobile phone, a tablet computer, a network device, a server, or an intelligent computer, or may be a content delivery network bandwidth control network or content delivery network bandwidth control cluster composed of multiple content delivery network bandwidth control devices.

The embodiments of the present application provide a content delivery network bandwidth control method, apparatus, device, and computer-readable storage medium, which will be described in detail below respectively.

Those skilled in the art may understand that the application environment shown in FIG. 1 is merely one application scenario related to the solutions of the present application, and does not constitute a limitation on the application scenarios of the solutions of the present application. Other application environments may further comprise more or fewer content delivery network bandwidth control devices than those shown in FIG. 1, or different network connection relationships among the content delivery network bandwidth control devices. For example, only one content delivery network bandwidth control device is shown in FIG. 1, and it can be understood that the scenario of the content delivery network bandwidth control method may further comprise one or more content delivery network bandwidth control devices, which is not specifically limited herein. The content delivery network bandwidth control device 100 may further comprise a memory for storing upgrade traffic data and other data.

It should be noted that the schematic diagram of the scenario of the content delivery network bandwidth control method shown in FIG. 1 is merely an example. The scenario of the content delivery network bandwidth control method described in the embodiments of the present application is intended to more clearly illustrate the technical solutions in the embodiments of the present application, and does not constitute a limitation on the technical solutions provided in the embodiments of the present application.

Based on the above scenario of the content delivery network bandwidth control method, various embodiments of the content delivery network bandwidth control method disclosed in the present application are proposed.

As shown in FIG. 2, FIG. 2 is a schematic flowchart of an embodiment of the content delivery network bandwidth control method according to an embodiment of the present application. The content delivery network bandwidth control method comprises the following steps 201 to 203:
201. Predicting, based on historical traffic data and current active data of a target upgrade platform, traffic growth trend data of the target upgrade platform within a target prediction time period.

The content delivery network bandwidth control method in this embodiment is applied to a content delivery network bandwidth control device. The type and quantity of the content delivery network bandwidth control devices are not specifically limited. That is, the content delivery network bandwidth control device may be one or more intelligent terminals or servers. In a specific embodiment, the content delivery network bandwidth control device is an intelligent computer or a server carrying the target upgrade platform. The target upgrade platform is an application upgrade management platform preset in the content delivery network bandwidth control device and configured to manage and release software upgrades so as to assist developers and operation and maintenance personnel in automatically performing software version control, release, and management. The target upgrade platform comprises an upgrade management backend and an API (Application Programming Interface) service. The upgrade management backend is configured to provide functions related to upgrade and the like. The API service is configured as a cloud service accessed by terminal devices and used to distribute CMS (Content Management System) configured operation content.

Specifically, since daily task distribution trends of the target upgrade platform fluctuate greatly and a traffic charging manner is a 95th-percentile peak charging manner, during operation, the content delivery network bandwidth control device further responds to a content delivery network bandwidth control request for the target upgrade platform. The content delivery network bandwidth control request is an operation instruction for driving the content delivery network bandwidth control device to perform content delivery network bandwidth control on upgrade requests of the target upgrade platform according to traffic growth trend data. Optionally, a triggering manner of the content delivery network bandwidth control request is not specifically limited herein. That is, the content delivery network bandwidth control request may be user-triggered. For example, a user, such as an application developer or operation and maintenance personnel, actively triggers the content delivery network bandwidth control request for the target upgrade platform by clicking a content delivery network bandwidth control button corresponding to the target upgrade platform in the content delivery network bandwidth control device. Optionally, the content delivery network bandwidth control request may also be automatically triggered by the content delivery network bandwidth control device. For example, the content delivery network bandwidth control device presets a content delivery network bandwidth control process, and automatically triggers the content delivery network bandwidth control request when the target upgrade platform receives an upgrade request. The 95th-percentile peak charging manner is a network charging manner that charges according to network bandwidth usage and charges based on a highest peak bandwidth of network traffic within a period of time.

Specifically, after acquiring the content delivery network bandwidth control request, the content delivery network bandwidth control device further predicts, based on historical traffic data and current active data of the target upgrade platform, traffic growth trend data of the target upgrade platform within a target prediction time period, and performs traffic control on upgrade requests received by the target upgrade platform based on the traffic growth trend data in subsequent steps.

Specifically, the content delivery network bandwidth control device periodically acquires the historical traffic data of the target upgrade platform through the upgrade management backend according to an acquisition time interval in a preset acquisition strategy. The historical traffic data is traffic variation information representing traffic processed by a content delivery network service in the target upgrade platform within a preset time range. Optionally, the preset acquisition time interval is an interval parameter custom-defined based on an actual traffic prediction scenario. Optionally, in a specific embodiment, the acquisition time interval is 1 minute. That is, the content delivery network bandwidth control device periodically acquires, through the upgrade management backend every minute, past traffic index growth data of the content delivery network service in the target upgrade platform.

Specifically, after acquiring the historical traffic data of the target upgrade platform, the content delivery network bandwidth control device further acquires current active data of the target upgrade platform, and predicts traffic growth trend data of the target upgrade platform within the target prediction time period according to the historical traffic data and the current active data. The current active data is represented as a parameter index of a number of active users of the target upgrade platform within a preset time period. Optionally, in a specific embodiment, the current active data may be any one of daily active data, weekly active data, and monthly active data of the target upgrade platform.

Specifically, after acquiring the historical traffic data and the current active data of the target upgrade platform, the content delivery network bandwidth control device inputs the historical traffic data and the current active data into a preset traffic prediction model to perform traffic prediction, and acquires traffic growth trend data corresponding to the target upgrade platform output by the traffic prediction model. The traffic prediction model is a pre-trained neural network model configured to predict traffic growth trend data of the target upgrade platform. The traffic growth trend data is a data index representing a traffic growth state of the target upgrade platform within a predicted target prediction time period. Optionally, the traffic growth trend data comprises growth trend data and peak traffic data. The growth trend data is a traffic growth trend index representing the target upgrade platform within the predicted target prediction time period. The peak traffic data is a predicted traffic peak index representing the target upgrade platform within the predicted target prediction time period.

202. Calculating a predicted distribution bandwidth of the target upgrade platform according to the traffic growth trend data and peak traffic data, and determining a target control strategy of the target upgrade platform according to the predicted distribution bandwidth and a preset bandwidth control threshold.

Specifically, after acquiring the traffic growth trend data of the target upgrade platform, the content delivery network bandwidth control device further calculates the predicted distribution bandwidth of the target upgrade platform according to the traffic growth trend data and the peak traffic data, determines the target control strategy of the target upgrade platform according to the predicted distribution bandwidth and the preset bandwidth control threshold, and performs traffic control on upgrade requests of the target upgrade platform through the target control strategy in subsequent steps. The target control strategy comprises any one of a rate limiting control strategy and a passthrough control strategy. The rate limiting control strategy is a control strategy representing that bandwidth growth of the target upgrade platform is excessively high and distribution of upgrade tasks corresponding to upgrade requests needs to be restricted so as to implement traffic control. The passthrough control strategy is a control strategy representing that bandwidth growth of the target upgrade platform is relatively slow and no distribution restriction is required for upgrade distribution tasks corresponding to upgrade requests.

Specifically, after acquiring the traffic growth trend data, the content delivery network bandwidth control device extracts peak traffic data of the target upgrade platform, and calculates the predicted distribution bandwidth of the target upgrade platform based on the growth trend data and the peak traffic data. The peak traffic data may be traffic index data having a largest distribution bandwidth within a target peak period in the traffic growth trend data of the target upgrade platform.

Specifically, after acquiring the traffic growth trend data, the content delivery network bandwidth control device accumulates the traffic growth trend data to obtain total traffic of the target upgrade platform within the prediction period, divides the total traffic by the target prediction time period to obtain average traffic of the target upgrade platform within the prediction period, and calculates the predicted distribution bandwidth of the target upgrade platform according to the average traffic and the peak traffic data, wherein the predicted distribution bandwidth is a predicted upgrade bandwidth of the target upgrade platform within the target prediction time period when no distribution restriction is performed on the target upgrade platform.

Specifically, after acquiring the predicted distribution bandwidth of the target upgrade platform, the content delivery network bandwidth control device further determines the target control strategy corresponding to the target upgrade platform according to the predicted distribution bandwidth and the preset bandwidth control threshold.

Optionally, if the predicted distribution bandwidth is less than a preset bandwidth control threshold, the content delivery network bandwidth control device determines that a distribution bandwidth growth trend of the target upgrade platform within the prediction period is relatively stable, and no restriction is required for upgrade tasks corresponding to the target upgrade platform. The content delivery network bandwidth control device sets a preset passthrough control strategy as the target control strategy of the target upgrade platform.

Optionally, if the predicted distribution bandwidth is greater than the preset bandwidth control threshold, the content delivery network bandwidth control device determines that a distribution bandwidth growth fluctuation of the target upgrade platform within the prediction period is relatively large, and restriction is required for upgrade tasks corresponding to the target upgrade platform. The content delivery network bandwidth control device sets a preset rate limiting control strategy as the target control strategy of the target upgrade platform.

203. Performing bandwidth control on the current distribution bandwidth of the target upgrade platform according to the rate limiting percentage corresponding to the target control strategy.

Specifically, after determining the predicted distribution bandwidth of the target upgrade platform and determining the target control strategy of the target upgrade platform through the predicted distribution bandwidth, the content delivery network bandwidth control device further performs bandwidth control on the current distribution bandwidth of the target upgrade platform according to the rate limiting percentage in the target control strategy.

Specifically, after acquiring the target control strategy of the target upgrade platform, the content delivery network bandwidth control device further calculates the rate limiting percentage of the target control strategy according to a rate limiting coefficient of the target control strategy, determines a rate limiting attribute of the target control strategy based on the rate limiting percentage, and detects device identifiers corresponding to various upgrade requests of the target upgrade platform according to the rate limiting attribute, thereby performing rate limiting on the various upgrade requests so as to perform traffic control on the current distribution bandwidth of the target upgrade platform.

The content delivery network bandwidth control device acquires upgrade requests received by the target upgrade platform, parses the upgrade requests, acquires device identifiers carried in the upgrade requests, and verifies rate limiting verification coefficients in the device identifiers according to the rate limiting attributes in the target control strategy, thereby determining whether the upgrade requests are rate-limited upgrade requests requiring distribution control on corresponding upgrade tasks. If an upgrade request is a rate-limited upgrade request, the target upgrade platform is controlled to reject the rate-limited upgrade request, thereby implementing upgrade traffic control on the target upgrade platform and reducing the current distribution bandwidth of the target upgrade platform.

In this embodiment, the content delivery network bandwidth control device predicts, based on historical traffic data and current active data of the target upgrade platform, traffic growth trend data of the target upgrade platform within the target prediction time period; calculates a predicted distribution bandwidth of the target upgrade platform according to the traffic growth trend data and peak traffic data; determines a target control strategy of the target upgrade platform according to the predicted distribution bandwidth and a preset bandwidth control threshold, wherein the target control strategy comprises any one of a rate limiting control strategy and a passthrough control strategy; and performs bandwidth control on the current distribution bandwidth of the target upgrade platform according to the rate limiting percentage corresponding to the target control strategy. Accordingly, traffic data of the application upgrade management platform can be predicted, and a corresponding traffic control strategy can be set according to the traffic data, thereby performing rate limiting management and control on upgrade requests, reducing the distribution bandwidth of the application upgrade management platform, and further reducing traffic cost of the application upgrade management platform.

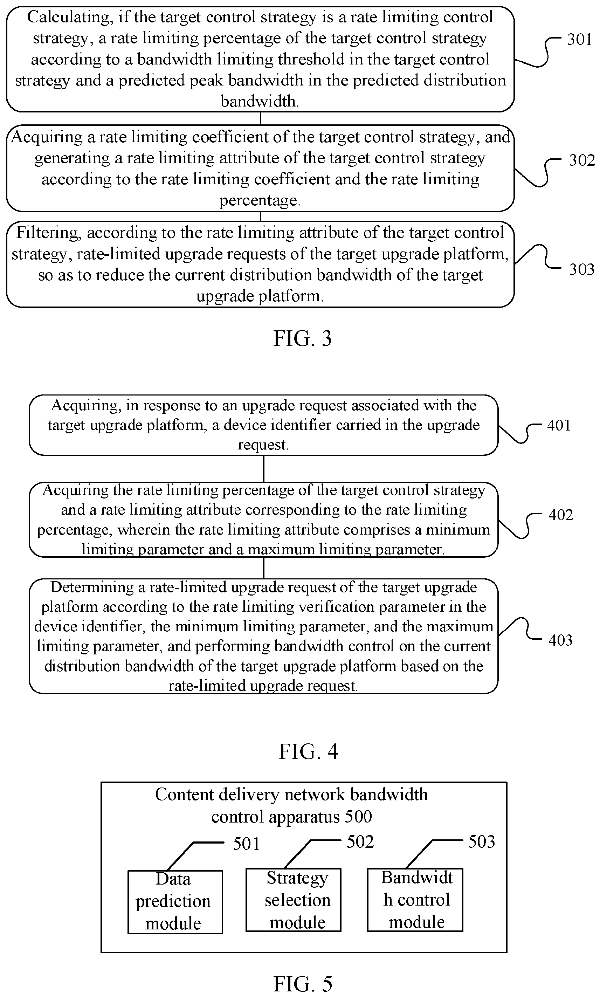

As shown in FIG. 3, FIG. 3 is a schematic flowchart of an embodiment of determining a rate limiting percentage and a rate limiting attribute of a target control strategy in the content delivery network bandwidth control method according to an embodiment of the present application. Specifically, in this embodiment, the content delivery network bandwidth control method further comprises steps 301 to 303:
301. Calculating, if the target control strategy is a rate limiting control strategy, a rate limiting percentage of the target control strategy according to a bandwidth limiting threshold in the target control strategy and a predicted peak bandwidth in the predicted distribution bandwidth.

Based on the above embodiment, in this embodiment, after determining the predicted distribution bandwidth of the target upgrade platform and determining, through the predicted distribution bandwidth, that the target control strategy of the target upgrade platform is a rate limiting control strategy, the content delivery network bandwidth control device further calculates a rate limiting percentage LimitiPercent of the target control strategy according to the bandwidth limiting threshold in the target control strategy and the predicted peak bandwidth in the predicted distribution bandwidth.

Specifically, after acquiring the predicted distribution bandwidth of the target upgrade platform, the content delivery network bandwidth control device further acquires the predicted peak bandwidth in the predicted distribution bandwidth, and divides the bandwidth limiting threshold by the predicted peak bandwidth to obtain the rate limiting percentage in the target control strategy.

302. Acquiring a rate limiting coefficient of the target control strategy, and generating a rate limiting attribute of the target control strategy according to the rate limiting coefficient and the rate limiting percentage.

Specifically, after calculating the rate limiting percentage in the target control strategy according to the predicted peak bandwidth and the bandwidth limiting threshold, the content delivery network bandwidth control device further acquires the rate limiting coefficient of the target control strategy, and calculates the rate limiting attribute in the target control strategy according to the rate limiting coefficient and the rate limiting percentage. The rate limiting coefficient is an integer preset in the target control strategy and randomly generated within a preset coefficient interval. Optionally, in a specific embodiment, the preset coefficient interval is [00,99].

Specifically, after acquiring the rate limiting coefficient, the content delivery network bandwidth control device calculates a maximum limiting parameter of the target control strategy according to the rate limiting coefficient and the rate limiting percentage. Specifically, a calculation formula of the maximum limiting parameter is as follows:
MaxLimitTailNum=N+100*LimitiPercent.
MaxLimitTailNum is the maximum limiting parameter of the target control strategy, N is the rate limiting coefficient, and LimitiPercent is the rate limiting percentage.

Specifically, after acquiring the maximum limiting parameter, the content delivery network bandwidth control device further determines a minimum limiting parameter of the target control strategy according to the maximum limiting parameter and a preset rate limiting threshold. In a specific embodiment, the preset rate limiting threshold is 100.

Specifically, in a specific embodiment, a calculation manner of the minimum limiting parameter based on the preset rate limiting threshold is as follows:
MinLimintTailNum=MaxLimitTailNum<=M?X∶MaxLimintTailNum-M.
MinLimintTailNum is the minimum limiting parameter of the target control strategy, M is the preset rate limiting threshold, and X is a preset limiting parameter of the target control strategy.

That is, after acquiring the maximum limiting parameter, the content delivery network bandwidth control device compares the maximum limiting parameter with the preset rate limiting threshold so as to determine the minimum limiting parameter.

Optionally, if the maximum limiting parameter is less than or equal to the preset rate limiting threshold, the preset limiting parameter of the target control strategy is set as the minimum limiting parameter. Optionally, in a specific embodiment, the preset limiting parameter is -1.

Optionally, if the maximum limiting parameter is greater than the preset rate limiting threshold, a difference obtained by subtracting the preset rate limiting threshold from the maximum limiting parameter is set as the minimum limiting parameter of the target control strategy.

Specifically, after determining the maximum limiting parameter and the minimum limiting parameter of the target control strategy, the content delivery network bandwidth control device sets the maximum limiting parameter and the minimum limiting parameter as limiting attributes of the target control strategy.

303. Filtering, according to the rate limiting attribute of the target control strategy, rate-limited upgrade requests of the target upgrade platform, so as to reduce the current distribution bandwidth of the target upgrade platform.

Specifically, after dynamically generating the rate limiting attribute of the target control strategy, the content delivery network bandwidth control device performs traffic control on upgrade requests received by the target upgrade platform according to the rate limiting attribute of the target control strategy.

The content delivery network bandwidth control device acquires upgrade requests received by the target upgrade platform, parses the upgrade requests, acquires device identifiers carried in the upgrade requests, and verifies rate limiting verification coefficients in the device identifiers according to the rate limiting attributes in the target control strategy, thereby determining whether the upgrade requests are rate-limited upgrade requests to be intercepted, so as to perform upgrade traffic control on the rate-limited upgrade requests of the target upgrade platform, thereby reducing the current distribution bandwidth of the target upgrade platform. The rate-limited upgrade request is an upgrade request in which the rate limiting verification coefficient in the device identifier falls within a rate limiting interval corresponding to the rate limiting attribute. Optionally, in a specific embodiment, the rate limiting verification coefficient is the last two numeric characters of the device identifier.

In this embodiment, after determining that the target control strategy is a rate limiting control strategy, the content delivery network bandwidth control device calculates the rate limiting percentage of the target control strategy according to the bandwidth limiting threshold in the target control strategy and the predicted peak bandwidth in the predicted distribution bandwidth; acquires the rate limiting coefficient of the target control strategy, and generates the rate limiting attribute of the target control strategy according to the rate limiting coefficient and the rate limiting percentage; and performs traffic control on upgrade requests of the target upgrade platform according to the rate limiting attribute of the target control strategy. Accordingly, the rate limiting attribute is dynamically updated, and the current distribution bandwidth of the application upgrade management platform is reduced through the rate limiting attribute.

As shown in FIG. 4, FIG. 4 is a schematic flowchart of an embodiment of performing rate limiting control on upgrade requests of the target upgrade platform through the target control strategy in the content delivery network bandwidth control method according to an embodiment of the present application. Specifically, in this embodiment, the content delivery network bandwidth control method further comprises steps 401 to 403:
401. Acquiring, in response to an upgrade request associated with the target upgrade platform, a device identifier carried in the upgrade request.

Based on the above embodiment, in this embodiment, after determining the target control strategy of the target upgrade platform, the content delivery network bandwidth control device further responds to the upgrade request associated with the target upgrade platform, and parses the device identifier carried in the upgrade request. The upgrade request is an operation request for requesting the target upgrade platform to distribute an upgrade task corresponding to a target application. The device identifier is device identification information representing a target service device that issues the upgrade request.

402. Acquiring the rate limiting percentage of the target control strategy and a rate limiting attribute corresponding to the rate limiting percentage, wherein the rate limiting attribute comprises a minimum limiting parameter and a maximum limiting parameter.

Specifically, after acquiring the device identifier corresponding to the upgrade request, the content delivery network bandwidth control device further acquires a rate limiting verification parameter in the device identifier for determining whether to restrict the upgrade request. Optionally, in a specific embodiment, the rate limiting verification parameter is the last two tail-number digits of the device identifier. In other embodiments, the rate limiting verification parameter may also correspond to any numeric character in the device identifier according to requirements of an actual application scenario.

After acquiring the rate limiting verification parameter, the content delivery network bandwidth control device further acquires the rate limiting percentage of the target control strategy and the rate limiting attribute corresponding to the rate limiting percentage, and performs content delivery network bandwidth control on the upgrade request in subsequent steps by comparing the rate limiting verification parameter with the rate limiting attribute. The rate limiting attribute comprises the minimum limiting parameter and the maximum limiting parameter.

403. Determining a rate-limited upgrade request of the target upgrade platform according to the rate limiting verification parameter in the device identifier, the minimum limiting parameter, and the maximum limiting parameter, and performing bandwidth control on the current distribution bandwidth of the target upgrade platform based on the rate-limited upgrade request.

Specifically, after acquiring the rate limiting verification parameter and the rate limiting attribute of the target control strategy, the content delivery network bandwidth control device performs traffic control on the upgrade request according to a traffic control rule in the target control strategy. Specifically, the traffic control rule is as follows:
TailNum<=MinLimintTailNum or (N<= TailNum<=MaxLimintTailNum).
TailNum is the rate limiting verification parameter, MinLimintTailNum is the minimum limiting parameter of the target control strategy, N is the rate limiting coefficient, and MaxLimintTailNum is the maximum limiting parameter of the target control strategy.

Optionally, if the rate limiting verification parameter in the device identifier is less than the minimum limiting parameter, or the rate limiting verification parameter is greater than a preset rate limiting coefficient and less than the maximum limiting parameter, the content delivery network bandwidth control device determines that the upgrade request corresponding to the rate limiting verification parameter is a rate-limited upgrade request, and performs rate limiting control on the rate-limited upgrade request according to the rate limiting control strategy. That is, the content delivery network bandwidth control device rejects the rate-limited upgrade request so as to implement a rate limiting operation on the target service device.

Optionally, if the rate limiting verification parameter in the device identifier is greater than the minimum limiting parameter, or the rate limiting verification parameter is less than the preset rate limiting coefficient, or the rate limiting verification parameter is greater than the preset maximum limiting parameter, the content delivery network bandwidth control device determines that the upgrade request is a target upgrade request that does not require rate limiting, and distributes a target upgrade task corresponding to the target upgrade request according to the passthrough control strategy.

In this embodiment, the content delivery network bandwidth control device acquires, in response to an upgrade request associated with the target upgrade platform, a device identifier carried in the upgrade request; acquires the rate limiting percentage of the target control strategy and a rate limiting attribute corresponding to the rate limiting percentage, wherein the rate limiting attribute comprises a minimum limiting parameter and a maximum limiting parameter; and determines a rate-limited upgrade request of the target upgrade platform according to the rate limiting verification parameter in the device identifier, the minimum limiting parameter, and the maximum limiting parameter, and performs bandwidth control on the current distribution bandwidth of the target upgrade platform based on the rate-limited upgrade request. Accordingly, selective passthrough requests for the upgrade can be implemented through the rate limiting attribute of the target control strategy and the device identifier of the upgrade request, thereby reducing the current distribution bandwidth and peak bandwidth of the target upgrade platform, and reducing traffic cost of the target upgrade platform.

In order to better implement the content delivery network bandwidth control method in the embodiments of the present application, based on the content delivery network bandwidth control method, the embodiments of the present application further provide a content delivery network bandwidth control apparatus. As shown in FIG. 5, FIG. 5 is a schematic structural diagram of a content delivery network bandwidth control apparatus according to an embodiment of the present application. Specifically, the content delivery network bandwidth control apparatus 500 comprises:
A data prediction module 501 configured to predict, based on historical traffic data and current active data of a target upgrade platform, traffic growth trend data of the target upgrade platform within a target prediction time period.

A strategy selection module 502 configured to calculate a predicted distribution bandwidth of the target upgrade platform according to the traffic growth trend data and peak traffic data, and determine a target control strategy of the target upgrade platform according to the predicted distribution bandwidth and a preset bandwidth control threshold, wherein the target control strategy comprises any one of a rate limiting control strategy and a passthrough control strategy.

A bandwidth control module 503 configured to perform bandwidth control on a current distribution bandwidth of the target upgrade platform according to a rate limiting percentage corresponding to the target control strategy.

In one possible implementation of this embodiment, the content delivery network bandwidth control apparatus determines the target control strategy of the target upgrade platform according to the predicted distribution bandwidth and a preset bandwidth control threshold, including:
Acquiring a bandwidth control threshold corresponding to the target upgrade platform.

Setting a preset passthrough control strategy as the target control strategy of the target upgrade platform if the predicted distribution bandwidth is less than the bandwidth control threshold.

Setting a preset rate limiting control strategy as the target control strategy of the target upgrade platform if the predicted distribution bandwidth is greater than or equal to the bandwidth control threshold.

In one possible implementation of this embodiment, the content delivery network bandwidth control apparatus performs bandwidth control on the current distribution bandwidth of the target upgrade platform according to the rate limiting percentage corresponding to the target control strategy, including:
Acquiring, in response to an upgrade request associated with the target upgrade platform, a device identifier carried in the upgrade request.

Acquiring the rate limiting percentage of the target control strategy and a rate limiting attribute corresponding to the rate limiting percentage, wherein the rate limiting attribute comprises a minimum limiting parameter and a maximum limiting parameter.

Determining a rate-limited upgrade request of the target upgrade platform according to a rate limiting verification parameter in the device identifier, the minimum limiting parameter, and the maximum limiting parameter, and performing bandwidth control on the current distribution bandwidth of the target upgrade platform based on the rate-limited upgrade request.

In one possible implementation of this embodiment, the content delivery network bandwidth control apparatus determines the rate-limited upgrade request of the target upgrade platform according to the rate limiting verification parameter in the device identifier, the minimum limiting parameter, and the maximum limiting parameter, and performs bandwidth control on the current distribution bandwidth of the target upgrade platform based on the rate-limited upgrade request, including:
Setting the upgrade request corresponding to the device identifier as the rate-limited upgrade request if the rate limiting verification parameter in the device identifier is less than the minimum limiting parameter, or the rate limiting verification parameter is greater than a preset rate limiting coefficient and less than the maximum limiting parameter.

Performing rate limiting control on the rate-limited upgrade request according to the rate limiting control strategy, so as to reduce the current distribution bandwidth of the target upgrade platform.

In one possible implementation of this embodiment, the content delivery network bandwidth control apparatus performs bandwidth control on the current distribution bandwidth of the target upgrade platform according to the rate limiting percentage corresponding to the target control strategy, including:
Calculating, if the target control strategy is a rate limiting control strategy, the rate limiting percentage of the target control strategy according to a bandwidth limiting threshold in the target control strategy and a predicted peak bandwidth in the predicted distribution bandwidth.

Acquiring a rate limiting coefficient of the target control strategy, and generating a rate limiting attribute of the target control strategy according to the rate limiting coefficient and the rate limiting percentage.

Filtering, according to the rate limiting attribute of the target control strategy, rate-limited upgrade requests of the target upgrade platform, so as to reduce the current distribution bandwidth of the target upgrade platform.

In one possible implementation of this embodiment, the content delivery network bandwidth control apparatus generates the rate limiting attribute of the target control strategy according to the rate limiting coefficient and the rate limiting percentage, including:
Calculating a maximum limiting parameter of the target control strategy according to the rate limiting coefficient and the rate limiting percentage.

Setting a preset limiting parameter as a minimum limiting parameter of the target control strategy if the maximum limiting parameter is less than a preset rate limiting threshold.

Setting a difference between the maximum limiting parameter and the preset rate limiting threshold as the minimum limiting parameter of the target control strategy if the maximum limiting parameter is greater than the preset rate limiting threshold.

Setting the maximum limiting parameter and the minimum limiting parameter as the rate limiting attribute of the target control strategy.

In one possible implementation of this embodiment, the content delivery network bandwidth control apparatus predicts, based on historical traffic data and current active data of the target upgrade platform, traffic growth trend data of the target upgrade platform within the target prediction time period, including:
Capturing, according to a preset acquisition strategy, the historical traffic data of the target upgrade platform and the current active data of the target upgrade platform.

Inputting the historical traffic data and the current active data into a preset traffic prediction model to perform traffic prediction, so as to obtain the traffic growth trend data of the target upgrade platform within the target prediction time period.

In this embodiment, the content delivery network bandwidth control apparatus predicts, based on historical traffic data and current active data of a target upgrade platform, traffic growth trend data of the target upgrade platform within a target prediction time period; calculates a predicted distribution bandwidth of the target upgrade platform according to the traffic growth trend data and peak traffic data; determines a target control strategy of the target upgrade platform according to the predicted distribution bandwidth and a preset bandwidth control threshold, wherein the target control strategy comprises any one of a rate limiting control strategy and a passthrough control strategy; and performs bandwidth control on the current distribution bandwidth of the target upgrade platform according to the rate limiting percentage corresponding to the target control strategy. Accordingly, traffic data of the application upgrade management platform can be predicted, and a corresponding traffic control strategy can be set according to the traffic data, thereby performing rate limiting management and control on upgrade requests, reducing the distribution bandwidth of the application upgrade management platform, and further reducing traffic cost of the application upgrade management platform.

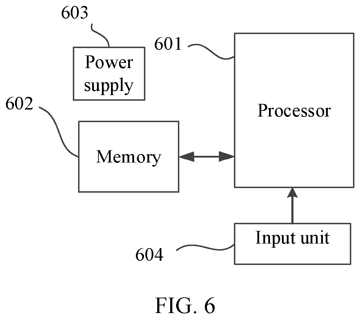

The embodiments of the present application further provide a content delivery network bandwidth control device. As shown in FIG. 6, FIG. 6 is a schematic structural diagram of an embodiment of the content delivery network bandwidth control device according to an embodiment of the present application.

The content delivery network bandwidth control device integrates any one of the content delivery network bandwidth control apparatuses provided in the embodiments of the present application. The content delivery network bandwidth control device comprises:
One or more processors.

A memory.

One or more applications, wherein the one or more applications are stored in the memory and configured to be executed by the one or more processors to implement the steps of the content delivery network bandwidth control method described in any embodiment of the above content delivery network bandwidth control method embodiments.

Specifically, the content delivery network bandwidth control device may comprise components such as one or more processors 601 having one or more processing cores, a memory 602 of one or more computer-readable storage media, a power supply 603, and an input unit 604. Those skilled in the art may understand that the structure of the content delivery network bandwidth control device shown in FIG. 6 does not constitute a limitation on the content delivery network bandwidth control device, and may comprise more or fewer components than those illustrated, or combine certain components, or have different component arrangements. Specifically:
The processor 601 is a control center of the content delivery network bandwidth control device, connects various parts of the entire content delivery network bandwidth control device through various interfaces and lines, and executes various functions of the content delivery network bandwidth control device and processes data by running or executing software programs and/or modules stored in the memory 602 and invoking data stored in the memory 602, thereby performing overall monitoring of the content delivery network bandwidth control device. Optionally, the processor 601 may comprise one or more processing cores. Preferably, the processor 601 may integrate an application processor and a modem processor, wherein the application processor mainly processes an operating system, a user interface, applications, and the like, and the modem processor mainly processes wireless communication. It can be understood that the above modem processor may also not be integrated into the processor 601.

The memory 602 may be configured to store software programs and modules. The processor 601 executes various functional applications and data processing by running the software programs and modules stored in the memory 602. The memory 602 may mainly comprise a program storage area and a data storage area, wherein the program storage area may store an operating system, applications required for at least one function (such as a sound playback function, an image playback function, and the like), and the like; and the data storage area may store data created according to use of the content delivery network bandwidth control device and the like. In addition, the memory 602 may comprise a high-speed random access memory, and may further comprise a non-volatile memory, such as at least one disk storage device, flash memory device, or another volatile solid-state storage device. Correspondingly, the memory 602 may further comprise a memory controller to provide the processor 601 with access to the memory 602.

The content delivery network bandwidth control device further comprises a power supply 603 configured to supply power to various components. Preferably, the power supply 603 may be logically connected to the processor 601 through a power management system, thereby implementing functions such as charging management, discharging management, and power consumption management through the power management system. The power supply 603 may further comprise any component such as one or more direct current or alternating current power supplies, a rechargeable system, a power failure detection circuit, a power converter or inverter, and a power state indicator.

The content delivery network bandwidth control device may further comprise an input unit 604 configured to receive input digital or character information and generate keyboard, mouse, joystick, optical, or trackball signal inputs related to user settings and function control.

Although not shown, the content delivery network bandwidth control device may further comprise a display unit and the like, which are not described herein again. Specifically, in this embodiment, the processor 601 in the content delivery network bandwidth control device loads executable files corresponding to processes of one or more applications into the memory 602 according to the following instructions, and the processor 601 runs the applications stored in the memory 602, thereby implementing various functions as follows:
Predicting, based on historical traffic data and current active data of a target upgrade platform, traffic growth trend data of the target upgrade platform within a target prediction time period.

Calculating a predicted distribution bandwidth of the target upgrade platform according to the traffic growth trend data and peak traffic data, and determining a target control strategy of the target upgrade platform according to the predicted distribution bandwidth and a preset bandwidth control threshold, wherein the target control strategy comprises any one of a rate limiting control strategy and a passthrough control strategy.

Performing bandwidth control on a current distribution bandwidth of the target upgrade platform according to a rate limiting percentage corresponding to the target control strategy.

Accordingly, the embodiments of the present application provide a computer-readable storage medium, which may comprise: a read-only memory (ROM), a random access memory (RAM), a magnetic disk, an optical disc, and the like. A computer program is stored thereon, and the computer program is loaded by a processor to execute the steps of any one of the content delivery network bandwidth control methods provided in the embodiments of the present application. For example, the computer program loaded by the processor may execute the following steps:
Predicting, based on historical traffic data and current active data of a target upgrade platform, traffic growth trend data of the target upgrade platform within a target prediction time period.

Calculating a predicted distribution bandwidth of the target upgrade platform according to the traffic growth trend data and peak traffic data, and determining a target control strategy of the target upgrade platform according to the predicted distribution bandwidth and a preset bandwidth control threshold, wherein the target control strategy comprises any one of a rate limiting control strategy and a passthrough control strategy.

Performing bandwidth control on a current distribution bandwidth of the target upgrade platform according to a rate limiting percentage corresponding to the target control strategy.

In the above embodiments, descriptions of the respective embodiments have different emphases. For parts not described in detail in a certain embodiment, reference may be made to the detailed descriptions of other embodiments above, and details are not repeated herein.

In specific implementations, the above respective units or structures may be implemented as independent entities, or may be arbitrarily combined and implemented as the same entity or several entities. For specific implementations of the above respective units or structures, reference may be made to the foregoing method embodiments, and details are not repeated herein.

For specific implementations of the above respective operations, reference may be made to the foregoing embodiments, and details are not repeated herein.

The content delivery network bandwidth control method provided in the embodiments of the present application has been described in detail above. Specific embodiments are used herein to illustrate the principles and implementations of the present application. The descriptions of the above embodiments are merely intended to assist in understanding the method and core concept of the present application. Meanwhile, those skilled in the art may make changes to specific implementations and application scopes according to the concept of the present application. Accordingly, the content of this specification should not be construed as limiting the present application.

## Claims

1. A content delivery network bandwidth control method, comprising:
predicting, based on historical traffic data and current active data of a target upgrade platform, traffic growth trend data of the target upgrade platform within a target prediction time period;
calculating a predicted distribution bandwidth of the target upgrade platform according to the traffic growth trend data and peak traffic data, and determining a target control strategy of the target upgrade platform according to the predicted distribution bandwidth and a preset bandwidth control threshold, wherein the target control strategy comprises any one of a rate limiting control strategy and a passthrough control strategy; and
performing bandwidth control on a current distribution bandwidth of the target upgrade platform according to a rate limiting percentage corresponding to the target control strategy.

2. The content delivery network bandwidth control method according to claim 1, wherein the determining the target control strategy of the target upgrade platform according to the predicted distribution bandwidth and the preset bandwidth control threshold comprises:
acquiring a bandwidth control threshold corresponding to the target upgrade platform;
setting a preset passthrough control strategy as the target control strategy of the target upgrade platform if the predicted distribution bandwidth is less than the bandwidth control threshold; and
setting a preset rate limiting control strategy as the target control strategy of the target upgrade platform if the predicted distribution bandwidth is greater than or equal to the bandwidth control threshold.

3. The content delivery network bandwidth control method according to claim 2, wherein the performing bandwidth control on the current distribution bandwidth of the target upgrade platform according to the rate limiting percentage corresponding to the target control strategy comprises:
acquiring, in response to an upgrade request associated with the target upgrade platform, a device identifier carried in the upgrade request;
acquiring the rate limiting percentage of the target control strategy and a rate limiting attribute corresponding to the rate limiting percentage, wherein the rate limiting attribute comprises a minimum limiting parameter and a maximum limiting parameter; and
determining a rate-limited upgrade request of the target upgrade platform according to a rate limiting verification parameter in the device identifier, the minimum limiting parameter, and the maximum limiting parameter, and performing bandwidth control on the current distribution bandwidth of the target upgrade platform based on the rate-limited upgrade request.

4. The content delivery network bandwidth control method according to claim 3, wherein the determining the rate-limited upgrade request of the target upgrade platform according to the rate limiting verification parameter in the device identifier, the minimum limiting parameter, and the maximum limiting parameter, and performing bandwidth control on the current distribution bandwidth of the target upgrade platform based on the rate-limited upgrade request comprises:
setting the upgrade request corresponding to the device identifier as the rate-limited upgrade request if the rate limiting verification parameter in the device identifier is less than the minimum limiting parameter, or the rate limiting verification parameter is greater than a preset rate limiting coefficient and less than the maximum limiting parameter; and
performing rate limiting control on the rate-limited upgrade request according to the rate limiting control strategy, so as to reduce the current distribution bandwidth of the target upgrade platform.

5. The content delivery network bandwidth control method according to claim 1, wherein the performing bandwidth control on the current distribution bandwidth of the target upgrade platform according to the rate limiting percentage corresponding to the target control strategy comprises:
calculating, if the target control strategy is a rate limiting control strategy, the rate limiting percentage of the target control strategy according to a bandwidth limiting threshold in the target control strategy and a predicted peak bandwidth in the predicted distribution bandwidth;
acquiring a rate limiting coefficient of the target control strategy, and generating a rate limiting attribute of the target control strategy according to the rate limiting coefficient and the rate limiting percentage; and
filtering, according to the rate limiting attribute of the target control strategy, rate-limited upgrade requests of the target upgrade platform, so as to reduce the current distribution bandwidth of the target upgrade platform.

6. The content delivery network bandwidth control method according to claim 5, wherein the generating the rate limiting attribute of the target control strategy according to the rate limiting coefficient and the rate limiting percentage comprises:
calculating a maximum limiting parameter of the target control strategy according to the rate limiting coefficient and the rate limiting percentage;
setting a preset limiting parameter as a minimum limiting parameter of the target control strategy if the maximum limiting parameter is less than a preset rate limiting threshold;
setting a difference between the maximum limiting parameter and the preset rate limiting threshold as the minimum limiting parameter of the target control strategy if the maximum limiting parameter is greater than the preset rate limiting threshold; and
setting the maximum limiting parameter and the minimum limiting parameter as the rate limiting attribute of the target control strategy.

7. The content delivery network bandwidth control method according to claim 1, wherein the predicting, based on the historical traffic data and the current active data of the target upgrade platform, the traffic growth trend data of the target upgrade platform within the target prediction time period comprises:
capturing, according to a preset acquisition strategy, the historical traffic data of the target upgrade platform and the current active data of the target upgrade platform; and
inputting the historical traffic data and the current active data into a preset traffic prediction model to perform traffic prediction, so as to obtain the traffic growth trend data of the target upgrade platform within the target prediction time period.

8. A content delivery network bandwidth control apparatus, comprising:
a data prediction module configured to predict, based on historical traffic data and current active data of a target upgrade platform, traffic growth trend data of the target upgrade platform within a target prediction time period;
a strategy selection module configured to calculate a predicted distribution bandwidth of the target upgrade platform according to the traffic growth trend data and peak traffic data, and determine a target control strategy of the target upgrade platform according to the predicted distribution bandwidth and a preset bandwidth control threshold, wherein the target control strategy comprises any one of a rate limiting control strategy and a passthrough control strategy; and
a bandwidth control module configured to perform bandwidth control on a current distribution bandwidth of the target upgrade platform according to a rate limiting percentage corresponding to the target control strategy.

9. The content delivery network bandwidth control apparatus according to claim 8, wherein the strategy selection module is further configured to determine the target control strategy of the target upgrade platform according to the predicted distribution bandwidth and the preset bandwidth control threshold, comprising:
acquiring a bandwidth control threshold corresponding to the target upgrade platform;
setting a preset passthrough control strategy as the target control strategy of the target upgrade platform if the predicted distribution bandwidth is less than the bandwidth control threshold; and
setting a preset rate limiting control strategy as the target control strategy of the target upgrade platform if the predicted distribution bandwidth is greater than or equal to the bandwidth control threshold.

10. The content delivery network bandwidth control apparatus according to claim 9, wherein the bandwidth control module is further configured to perform bandwidth control on the current distribution bandwidth of the target upgrade platform according to the rate limiting percentage corresponding to the target control strategy, comprising:
acquiring, in response to an upgrade request associated with the target upgrade platform, a device identifier carried in the upgrade request;
acquiring the rate limiting percentage of the target control strategy and a rate limiting attribute corresponding to the rate limiting percentage, wherein the rate limiting attribute comprises a minimum limiting parameter and a maximum limiting parameter; and
determining a rate-limited upgrade request of the target upgrade platform according to a rate limiting verification parameter in the device identifier, the minimum limiting parameter, and the maximum limiting parameter, and performing bandwidth control on the current distribution bandwidth of the target upgrade platform based on the rate-limited upgrade request.

11. The content delivery network bandwidth control apparatus according to claim 10, wherein the strategy selection module is further configured to determine the rate-limited upgrade request of the target upgrade platform according to the rate limiting verification parameter in the device identifier, the minimum limiting parameter, and the maximum limiting parameter, and perform bandwidth control on the current distribution bandwidth of the target upgrade platform based on the rate-limited upgrade request, comprising:
setting the upgrade request corresponding to the device identifier as the rate-limited upgrade request if the rate limiting verification parameter in the device identifier is less than the minimum limiting parameter, or the rate limiting verification parameter is greater than a preset rate limiting coefficient and less than the maximum limiting parameter; and
performing rate limiting control on the rate-limited upgrade request according to the rate limiting control strategy, so as to reduce the current distribution bandwidth of the target upgrade platform.

12. The content delivery network bandwidth control apparatus according to claim 8, wherein the bandwidth control module is further configured to perform bandwidth control on the current distribution bandwidth of the target upgrade platform according to the rate limiting percentage corresponding to the target control strategy, comprising:
calculating, if the target control strategy is a rate limiting control strategy, the rate limiting percentage of the target control strategy according to a bandwidth limiting threshold in the target control strategy and a predicted peak bandwidth in the predicted distribution bandwidth;
acquiring a rate limiting coefficient of the target control strategy, and generating a rate limiting attribute of the target control strategy according to the rate limiting coefficient and the rate limiting percentage; and
filtering, according to the rate limiting attribute of the target control strategy, rate-limited upgrade requests of the target upgrade platform, so as to reduce the current distribution bandwidth of the target upgrade platform.

13. The content delivery network bandwidth control apparatus according to claim 12, wherein the bandwidth control module is further configured to generate the rate limiting attribute of the target control strategy according to the rate limiting coefficient and the rate limiting percentage, comprising:
calculating a maximum limiting parameter of the target control strategy according to the rate limiting coefficient and the rate limiting percentage;
setting a preset limiting parameter as a minimum limiting parameter of the target control strategy if the maximum limiting parameter is less than a preset rate limiting threshold;
setting a difference between the maximum limiting parameter and the preset rate limiting threshold as the minimum limiting parameter of the target control strategy if the maximum limiting parameter is greater than the preset rate limiting threshold; and
setting the maximum limiting parameter and the minimum limiting parameter as the rate limiting attribute of the target control strategy.

14. The content delivery network bandwidth control apparatus according to claim 8, wherein the data prediction module is further configured to predict, based on the historical traffic data and the current active data of the target upgrade platform, the traffic growth trend data of the target upgrade platform within the target prediction time period, comprising:
capturing, according to a preset acquisition strategy, the historical traffic data of the target upgrade platform and the current active data of the target upgrade platform; and
inputting the historical traffic data and the current active data into a preset traffic prediction model to perform traffic prediction, so as to obtain the traffic growth trend data of the target upgrade platform within the target prediction time period.

15. A content delivery network bandwidth control device, comprising:
one or more processors;
a memory; and
one or more applications, wherein the one or more applications are stored in the memory and configured to be executed by the one or more processors to implement the steps of the content delivery network bandwidth control method according to any one of claims 1 to 7.

16. A computer-readable storage medium, wherein a computer program is stored thereon, and the computer program is loaded by a processor to execute the steps of the content delivery network bandwidth control method according to any one of claims 1 to 7.
